(19) Europäisches Patentamt
European Patent Office
Office européen des brevets

(11) **EP 2 852 037 A1**

(12) **EUROPEAN PATENT APPLICATION**

(43) Date of publication:
**25.03.2015 Bulletin 2015/13**

(51) Int Cl.:
**H02K 11/00** (2006.01) **G01B 5/00** (2006.01)
**G01B 21/16** (2006.01) **H02K 7/18** (2006.01)

(21) Application number: **13184992.9**

(22) Date of filing: **18.09.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Siemens Aktiengesellschaft**
**80333 München (DE)**

(72) Inventor: **Madsen, Anders Jakob**
**7400 Herning (DK)**

(54) **Width determination and control of a gap between a rotor and a stator of a generator**

(57)    The invention relates to a method for determining an actual width of a gap (31) between a rotor (10) and a stator (20) of a generator of a wind turbine. The method involves measuring an actual temperature of the rotor and/or the stator and a separate determination of a reference width of the gap (32). By considering thermal expansion coefficients of the stator and the rotor (522, 523), the actual width of the gap (31) is obtained. Furthermore, the invention relates to a method for controlling an actual width of a gap (31) between a rotor (10) and a stator (20) of a generator of a wind turbine, wherein the method advantageously comprises a further step of heating and/or cooling the rotor (10) and/or the stator (20). Finally, the invention relates to a generator of a wind turbine, the generator comprising a control unit for controlling the actual width of the gap (31) between the rotor (10) and the stator (20).

FIG 1

EP 2 852 037 A1

**Description**

The present invention relates to a method for determining an actual width of a gap between a rotor and a stator of a generator of a wind turbine. Furthermore, the invention relates to a method for controlling an actual width of a gap between a rotor and a stator of a generator of a wind turbine. Finally, the invention relates to a generator of a wind turbine, the generator comprising a control unit for controlling the actual width of the gap between the rotor and the stator.

BACKGROUND OF THE INVENTION

The width of the gap between the stator and the rotor of a generator is a crucial and critical parameter for the operation of the generator. If on the one hand the width of the gap is too small, there is a risk of an abrasive movement between the rotor and the stator. Likewise, if the width of the gap is too small, there is also a risk of electric arcing and/or electric short circuiting between the rotor and the stator. These risks may lead to a damage of the generator resulting in a costly downtime of the generator. If on the other hand the width of the gap is too large, loss of efficiency of the generator may result. Therefore, a precise knowledge and a reliable control with regard to the width of the gap between the rotor and the stator is highly important.

Currently, the gap between the stator and the rotor is determined and controlled by repeated length measurements, such as optical and/or capacitive measurements of the gap. However, a disadvantage of this method is that costly equipment is needed. More precisely, it might be required that one or more optical and/or capacitive sensors are permanently included in the generator. Furthermore, precision of the width of the gap determined that way may be limited.

Thus, there exists an urgent need for an improved way to determine a width of a gap between a rotor and a stator of a generator of a wind turbine.

SUMMARY OF THE INVENTION

This objective is achieved by the independent claims. The dependent claims describe advantageous developments and modifications of the invention.

In accordance with the invention there is provided a method for determining an actual width of a gap between a rotor and a stator of a generator of a wind turbine. The stator comprises a peripheral stator surface with a peripheral stator surface radius, wherein the peripheral stator surface confines the gap between the stator and the rotor on a first side. The rotor comprises a peripheral rotor surface with a peripheral rotor surface radius, wherein the peripheral rotor surface confines the gap between the stator and the rotor on a second side. Furthermore, the stator and the rotor are arranged such that the peripheral stator surface and the peripheral rotor surface are substantially opposite to each other. The actual width of the gap is defined by the difference between the peripheral rotor surface radius and the peripheral stator surface radius. The method comprises the following steps:

- Measuring at least one out of a reference temperature of the stator and a reference temperature of the rotor;
- measuring at least one out of an actual temperature of the stator and an actual temperature of the rotor;
- determining a reference width of the gap between the rotor and the stator by means of a length measurement of the gap;
- adding an actual width difference of the gap between the rotor and the stator to the reference width of the gap, wherein the actual width difference of the gap takes thermal expansion of the rotor and thermal expansion of the stator into consideration.

A generator, which is also denoted as an electric generator, is a device that converts mechanical energy into electrical energy. In a generator, the rotor is rotatably mounted about a rotor axis of rotation with regard to the stator. In principle, a generator may comprise an external rotor or an internal rotor. In the case of an internal rotor, the rotor is arranged radially more inward with regard to the rotor axis of rotation, compared to the stator; in the case of an external rotor, the rotor is arranged radially more outward with regard to the rotor axis of rotation and compared to the stator.

In the case of an internal rotor, the peripheral rotor surface radius is also referred to as an outer rotor radius and the peripheral stator suface radius is also referred to as an inner stator radius. Likewise, in the case of an external rotor, the peripheral rotor surface radius is also referred to as an inner rotor radius and the peripheral stator suface radius is also referred to as an outer stator radius.

The stator and/or the rotor may have an annular shape in a cross-sectional view perpendicular to the rotor axis of rotation. In this case, the peripheral stator surface and/or the peripheral rotor surface may have a circular shape, viewed in a cross-section perpendicular to the rotor axis of rotation. An annular shape is advantageous during operation of the generator, i.e. during rotation of the rotor relative to the stator.

As a first example, the peripheral stator surface and/or the peripheral rotor surface comprises a substantially flat shape.

As a second example, the peripheral stator surface and/or the peripheral rotor surface are convexly curved.

The gap may be characterised as being confined by four sides. On the first side, the gap is limited by the peripheral stator surface. On the second side, the gap is limited by the peripheral rotor surface. Particularly, the third and the fourth side are substantially parallel to each other and both substantially perpendicular to the first and the second side.

The gap between the rotor and the stator may be filled with a medium. Advantageously, the medium comprises air. Therefore, the gap between the rotor and the stator is also referred to as the air gap of the generator.

Under operation of the generator, i.e. if the rotor fulfills a rotational movement about its rotor axis of rotation, a temperature of the rotor and/or a temperature of the stator may change. In particular, the temperatures of the rotor and the stator increases. The temperature of the stator may in particular increase because typically stator windings with electrical currents are a part of the stator. During operation of the generator, the electrical currents are generated and consequently heat is generated. This leads to an increase of the temperature of the stator. On the other hand, the temperature of the rotor may increase, too, due to the fact of the rotating movement of the rotor, losses within the electromagnetic system of the generator, and heat coming from the stator.

The temperature within the rotor and the stator may each be relatively homogenously distributed. In other words, the temperature is substantially equal, regardless at what point or section of the stator or rotor the temperature is measured.

Exemplarily, the temperature of the stator may reach up to 130 degrees Celsius and the temperature of the rotor may reach up to 60 degrees Celsius.

In an advantageous embodiment, the temperature of the stator is equal or higher than the temperature of the rotor.

The temperature of the rotor may be substantially equal to the temperature of a rotor house which is housing the rotor. The temperature of the rotor may be smaller than the temperature of the stator as the rotor is in a closer thermal contact to the ambiance. If the temperature of the ambiance is lower than the temperature of the stator, this may lead to a relative decrease of the temperature of the rotor compared to the temperature of the stator.

Advantageously, the reference temperature at which the reference width is determined is in a range between 0 degree and 30 degrees Celsius. In particular, the reference temperature is in a range between 15 degrees Celsius and 25 degrees Celsius.

Advantageously, the reference temperature of the stator and the reference temperature of the rotor are determined, as thus a high precision of the determinded actual width of the gap can be achieved If, however, determination of one of the two temperatures is e.g. technically complicated and it can be assumed that both temperatures are substantially equal under reference conditions, it may be advantageous to only measure one of the two temperatures and assume a similar temperature for the other of the two temperatures.

The same principle applies for the measurement of the actual temperatures of the rotor and the stator. For a precise and reliable determination of the actual width of the gap, knowledge of both temperatures is necessary. If, however, one temperature can be extrapolated from the other temperature, it may also be sufficient to only measure one of the two temperatures.

In a mathematical language, the method for determining the actual width of the gap $W_{act}$ of an outer rotor is based on the equation

$$W_{act} = W_{ref} + \Delta W = W_{ref} + (T_{stator,act} - T_{stator,ref}) * c_{th,stator} - (T_{rotor,act} - T_{rotor,ref}) * c_{th,rotor} , \qquad (1)$$

wherein $W_{ref}$ denotes the reference width of the gap, $\Delta W$ denotes the actual width difference of the gap, $T_{stator,act}$ denotes the actual temperature of the stator, $T_{stator,ref}$ denotes the reference temperature of the stator, $T_{rotor,act}$ denotes the actual temperature of the rotor, $T_{rotor,ref}$ denotes the reference temperature of the rotor, $c_{th,stator}$ denotes the thermal expansion coefficient of the stator, and $c_{th,rotor}$ denotes the thermal expansion coefficient of the rotor.

It has to be noted that the thermal expansion coefficients of the rotor and the stator may in principle be positive or negative. Thus, the notion "thermal expansion" includes in principle both an increase and a decrease of the volume of the stator and the rotor, respectively.

The generator of a wind turbine may have relatively large dimensions. More specifically, the outer stator radius and the inner rotor radius may approximately have a length of several meters, e.g. between 2 meters and 3 meters. The gap between the rotor and the stator, however, is small compared to the stator radius and the rotor radius. Exemplarily, the width of the gap is in a range between 1 mm (millimeter) and 10 mm, in particular the width of the gap is in a range between 4 mm and 6 mm.

In particular, the temperature of the stator and the rotor is relatively easy to determine. Additionally, in many current generator setups the temperature of the stator and the rotor are already measured anyway. Thus, with a small additional effort, the actual width of the gap is obtained and can be used for instance for increasing the efficiency of the generator.

In an advantageous embodiment, the thermal expansion coefficient of the rotor is substantially equal to the thermal expansion coefficient of the stator. This is for instance the case if the material of the rotor is substantially similar to the material of the stator. In other words, both parts of the generator react similarly if heated.

Additionally, the reference temperature of the stator is substantially equal to the reference temperature. This is for instance the case, if the generator is in thermal equilibrium during the measurement of the reference width.

If these two requirements are fulfilled, the method for determining the actual width of the gap simplifies considerably. The method comprises the following steps:

- Calculating the temperature difference between the stator and the rotor;
- multiplying the temperature difference with the thermal expansion coefficient of the stator, thus obtaining the actual width difference of the gap between the rotor and the stator; and
- adding the obtained actual width difference of the gap to the reference width of the gap, thus obtaining the actual width of the gap between the rotor and the stator.

Thus, by simply multiplying the thermal expansion coefficient of the stator, which is equal to the thermal expansion coefficient of the rotor, to the determined temperature difference between the rotor and the stator directly leads to an actual width difference of the gap. Subsequently, by simply adding the obtained actual width difference of the gap to the reference width of the gap which has for instance been determined beforehand at the reference temperature, the actual width of the gap is obtained. Apart from an initial determination of the reference width by means of a length measurement of the gap no additional length measurements are necessary. This is a significant advantage compared to conventional methods for determining the actual width of the gap.

In a mathematical language, equation (1) simplifies into

$$W_{act} = W_{ref} + \Delta W = W_{ref} + \Delta T * c_{th,stator}, \qquad (2)$$

wherein again $W_{ref}$ denotes the reference temperature, $\Delta W$ denotes the actual width difference of the gap, AT denotes the temperature difference between the stator and the rotor, and $c_{th,stator}$ denotes the thermal expansion coefficient of the stator.

In an advantageous embodiment, the reference width of the gap between the rotor and the stator is determined by means of at least one optical sensor and/or at least one capacitive sensor.

Advantageously, the optical sensor and/or the capacitive sensor is removed after having performed the measurement of the reference width.

Capacitive sensors may detect material that is conductive or has dielectric properties which are different from these of air. As many current generators of wind turbines are equipped with an optical or capacitive sensor, it is advantageous to use these sensors for the determination of the reference width. As a control or secondary measurement method, conventional methods for determining the actual width by means of the optical and/or capacitive sensors may be useful. However, for determining the actual width of the gap the method as described above is advantageously used.

In another advantageous embodiment, the reference width of the gap between the rotor and the stator is determined by means of a gauge.

A gauge includes relatively simple and basic pieces of material against which sizes or lengths can be measured. A gauge also includes complex pieces of machinery. Examples of advantageous gauges which can be used for determining the reference width is a feeler gauge or a caliper gauge. An advantage of using a gauge for the determination of the reference width is the fact that costly optical or capacitive sensors are not required to be included, i.e. mounted or installed, at the generator. In other words, the generator does not have to be equipped with expensive optical or capacitive sensors in order for determining the actual width of the gap between the rotor and the stator.

In another advantageous embodiment, the actual width difference of the gap between the rotor and the stator is determined while the rotor is rotating relative to the stator.

In other words, the described method can easily be carried out while the generator is operated. This is advantageous, as the determination of the actual width of the gap does not require a standstill, even not a short and temporary standstill, of the generator, in particular of the rotor.

The invention is also directed towards a method for controlling an actual width of a gap between a rotor and a stator of a generator of a wind turbine. The method comprises determining the actual width of the gap between the rotor and the stator according to the steps of the method described above and furthermore comprises the step of cooling the stator and/or cooling the rotor such that the actual width of the gap between the rotor and the stator remains in a predetermined range.

In other words, the additional process step of cooling the stator and/or cooling the rotor is added to the previous described steps. This enables to not only determine the actual width of the gap but also to control the actual width of the gap. This is highly important for an efficient and improved use of the generator.

Conventional methods which relate a temperature of the rotor and/or a temperature of the stator to an actual width of the gap between the rotor and the stator usually control the actual width by a maximum temperature of the rotor and a maximum temperature of the stator which. These maximum temperatures are not allowed to be exceeded. If the maximum allowed temperature is exceeded, the rotational velocity of the rotor is decreased or the rotor is brought to a standstill. However, the presented method takes into account the temperature difference between the stator and the rotor. This leads to a broadening of the allowed temperatures where operation of the generator, in particular rotation of the rotor, is allowed.

If, for instance, the temperature difference approaches a value where as a consequence the actual width is leaving the predetermined range, the stator, in the case that the stator is hotter than the rotor, is cooled. This leads to a decrease of the temperature difference and thus to an increase of the actual width of the gap.

Likewise, the actual width of the gap between the rotor and the stator may also be controlled by heating the stator and/or heating the rotor such that the actual width of the gap between the rotor and the stator remains in a predetermined range.

As an example, the stator is assumed to be significantly hotter than the rotor such that the actual width of the gap is close before leaving the predetermined range. Then, additionally or alternatively to cooling of the stator, the rotor may also be heated in order to make decrease the temperature difference and thus increase the width of the gap.

In an advantageous embodiment, the cooling is performed by guiding a cooling fluid in a way that the cooling fluid is in thermal contact with the stator and/or the rotor.

The cooling fluid may in principle be any liquid or gas which is brought into thermal contact with the stator and/or the rotor. Advantageously, the cooling fluid is guided towards and around the stator and/or the rotor. Experiments have shown that particularly cold air is useful and efficient for cooling the generator. Thus, advantageously, the cooling fluid comprises air.

It shall be noted that controlling the actual width of the gap between the rotor and the stator may be also be carried out by changing the power of the generator.

Finally, the invention relates to a generator of a wind turbine, the generator comprising a control unit for controlling the actual width of the gap between the rotor and the stator.

BRIEF DESCRIPTION OF THE DRAWINGS

Embodiments of the invention are now described, by way of example only, with reference to the accompanying drawings, of which:

Figure 1    shows a first example of a generator with an external rotor and a stator, separated by a gap;

Figure 2    shows a second example of a generator with an external rotor and a stator in a cross-sectional view along a rotor axis of rotation;

Figure 3    shows a comparison between a reference width of a gap between a rotor and a stator and an actual width of the gap;

Figure 4    shows a diagrammatic view of the process steps for determining an actual width of a gap between a rotor and a stator of a generator in the specific case of equal thermal expansion coefficients of rotor and stator and equal reference temperatures of rotor and stator; and

Figure 5    shows a diagrammatic view of the process steps for determining an actual width of a gap between a rotor and a stator of a generator.

The illustration of the drawings is schematical. Elements which refer to the same function are referred to by the same reference numerals in the drawings, if not stated other.

DESCRIPTION OF THE DRAWINGS

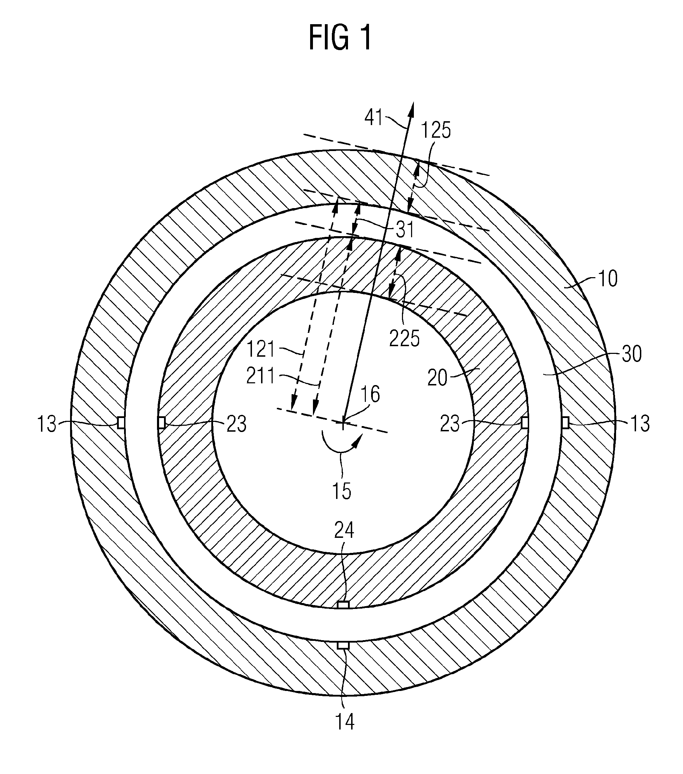

Figure 1 shows a rotor 10 and a stator 20, both forming part of a generator of a wind turbine. The rotor 10 is rotatably mounted about a rotor axis of rotation 16 and can be rotated in a rotational direction 15. The rotor 10 is arranged radially more outward with regard to the rotor axis of rotation 16 and compared to the stator 20. Thus, the generator is designed as a generator with an external rotor 10. The rotor 10 and the stator 20 both have an annular shape. Thus, an outer rotor radius, an inner rotor radius, an outer stator radius, an inner stator radius, an inner rotor surface 18 and an outer stator surface 28 can be assigned to the rotor 10 and the stator 20.

Figure 1 shows the generator at a specific temperature. In detail, the rotor 10 comprises a rotor temperature and the stator 20 comprises a stator temperature. Thus, an actual width 31 can be assigned to the gap 30 between the actual outer stator radius 211, referring to the outer stator surface 28, and the actual inner rotor radius 121, referring to the inner rotor surface 18.

Furthermore, an actual radial extension 125 can be assigned to the rotor 10 and an actual radial extension 225 can be assigned to the stator 20. In this context, the notion "radial" refers to a radial direction 41, pointing radially outward from the rotor axis of rotation 16.

Additionally, the stator 20 comprises an optical sensor stator part 23 and a capacitive sensor stator part 24. Correspondingly, the rotor 10 comprises an optical sensor rotor part 13 and a capacitive sensor rotor part 14. In order to take into account special asymmetries of the gap, two optical sensors 13, 23 have been arranged opposite to each other. The optical sensors 13, 23 and the capacity sensors 14, 24 are used in the embodiment shown in Figure 1 for determination of the reference width of the gap and for double checking the actual width of the gap 31, determined by the inventive method based on the temperature difference.

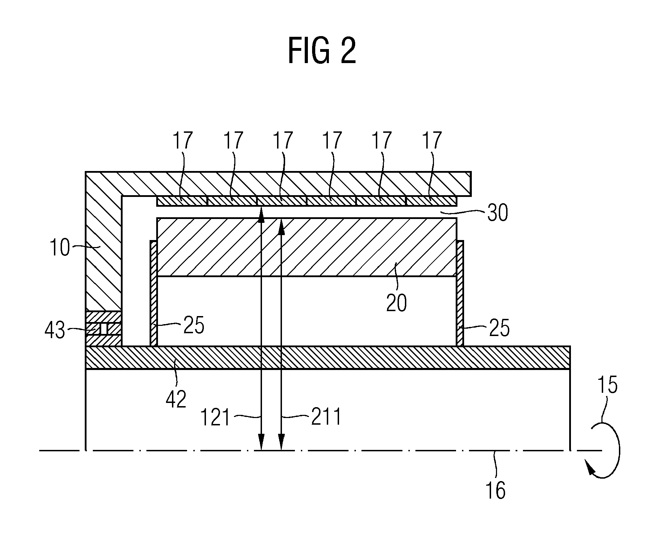

Figure 2 shows another embodiment of a generator comprising a rotor 10 and a stator 20. Figure 2 shows a cross-sectional view along a rotor axis of rotation 16. The rotor 10 is designed as an external rotor 10. It comprises a plurality of magnets 17. The magnets 17 are configured as permanent magnets. The rotor 10 is connected with a main shaft 42 via a bearing 43. The stator 20 is connected with the main shaft 42 via stator side plates 25.

The rotor 10 and the stator 20 are arranged such that a gap 30 is between them. A width of the gap 30 is determined, i.e. defined, by the difference between an actual inner rotor radius 121 and an actual outer stator radius 211.

Both the rotor 10 and the stator 20 are substantially made of steel.

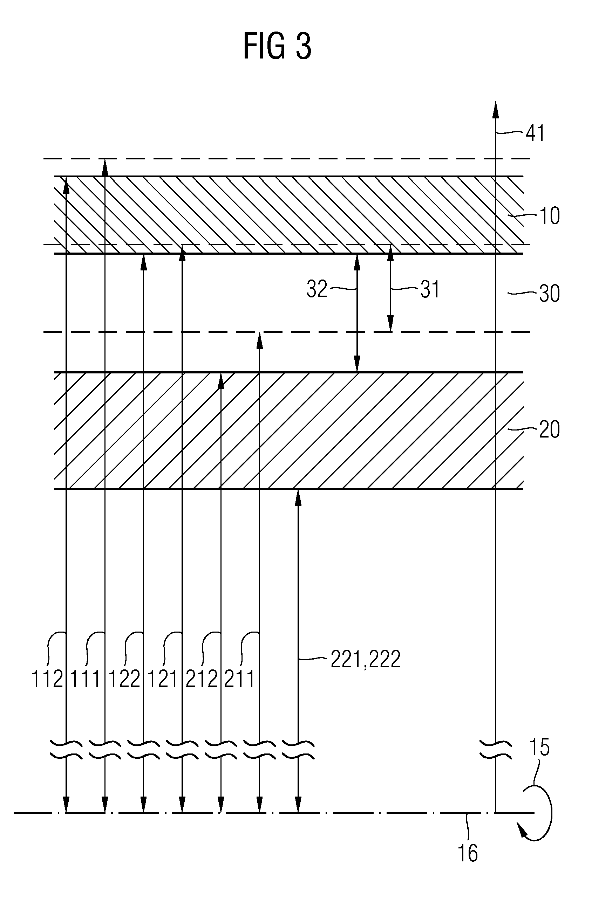

Figure 3 compares an actual width of the gap 31 with a reference width of the gap 32. In other words, it shows how the width of the gap 30 changes when the temperature of the rotor 10 and the temperature of the stator 20 change. The following dimensions refer to a radial direction 41 which is defined as pointing radially outward of a rotor axis of rotation 16 and in a plane that is perpendicular to the rotor axis of rotation 16. The rotor axis of rotation 16 has to be understood as the axis about which the rotor 10 rotates while the generator, of which the rotor 10 and the stator 20 forms part, is under operation. Also note that the explicit figures given in the following only apply to the concrete example shown in Figure 2.

At a reference temperature of 20 degrees Celsius the rotor 10 comprises a reference inner rotor radius 122 and a reference outer rotor radius 112. Likewise, the stator 20 comprises a reference outer stator radius 212 and a reference inner stator radius 222 at the reference temperature of 20 degrees Celsius. Furthermore, there exists a gap 30 between the reference outer stator radius 212 and the reference inner rotor radius 122 thus leading to a reference width of the gap 32. Obviously, the temperature of the rotor 10 and the temperature of the stator 20 are both 20 degrees Celsius at the reference temperature. The value of the reference width of the gap 32 is 4 mm.

Under operation of the generator, the temperature of the stator increases to 90 degrees Celsius and the temperature of the rotor increases to 40 degrees Celsius. Thus, the temperature difference between the stator 20 and the rotor 10 is 50 Kelvin. Due to the increased temperatures of the rotor and the stator, both the rotor 10 and the stator 20 expand. In detail, the actual outer rotor radius 111 increases compared to the reference outer rotor radius 112 and the actual inner rotor radius 121 increases compared to the reference inner rotor radius 122. Likewise, an actual outer stator radius 211 increases compared to the reference outer stator radius 212. The actual inner stator radius 221, however, remains unchanged compared to the reference inner stator radius 222. As a consequence, an actual width of the gap 31 shrinks, i.e. gets smaller, compared to the reference width of the gap 32.

Assuming a thermal expansion coefficient of -0.025 mm (millimeters) per Kelvin, the observed temperature difference of 50 Kelvin leads to an actual difference of the width of the gap of -1.25 mm, which under consideration of the reference width of the gap 32 of 4 mm leads to an actual width of the gap 31 of 2.75 mm.

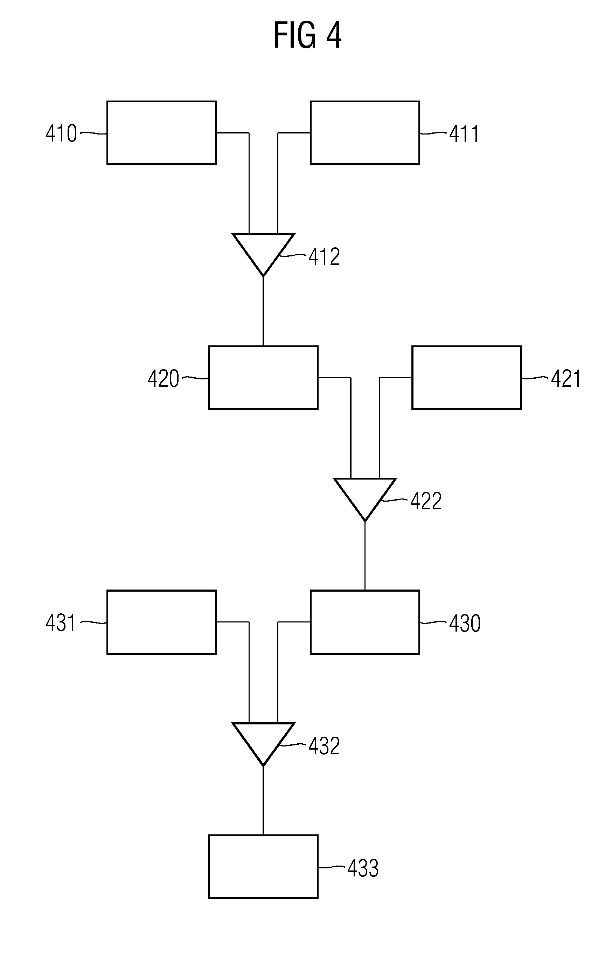

Figure 4 shows a diagrammatic view, i.e. a flowchart, of the method for determining the actual width of the gap between the rotor and the stator of a generator of a wind turbine under the advantageous conditions of equal thermal expansion coefficients and equal reference temperatures for stator and rotor, respectively. The method comprises a first step 410 where the actual temperature of the stator is measured. Furthermore, it comprises a second step 411, where the actual temperature of the rotor is measured. Subsequently, a difference between the actual temperature of the stator and the actual temperature of the rotor is performed by subtracting the temperature of the rotor from the temperature of the stator 412. Thus, a temperature difference is obtained 420. The obtained temperature difference is multiplied 422 with a thermal expansion coefficient of the stator 522, thus obtaining 430 an actual width difference of the gap between the rotor and the stator. Note that the thermal expansion coefficient of the stator 522 is substantially equal to the thermal expansion coefficient of the rotor, as both the rotor and the stator are substantially made of the same material. In the next step 431, a reference width is determined at a reference temperature by means of a length measurement of the gap, e.g. by a gauge. Subsequently, the determined reference width is added 432 to the previously obtained actual width difference of the gap. As a result, an actual width of the gap between the rotor and the stator is thus obtained 432.

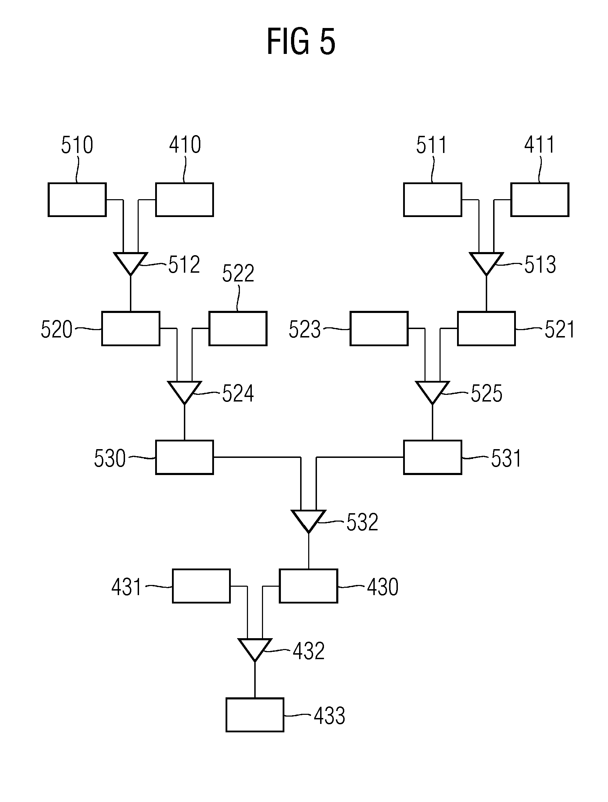

Figure 5 shows a diagrammatic view, i.e. a flowchart, of the method for determining the actual width of the gap between the rotor and the stator of a generator of a wind turbine in a more general case. The method comprises a first step 410 of determining the actual temperature of the stator. Exemplarily, the actual temperature of the stator is determined to be 90 degrees Celsius. Likewise, in a second step 411, the actual temperature of the rotor is determined. Exemplarily, the actual temperature of the rotor is determined to be 40 degrees Celsius.

In another step 510, the reference temperature of the stator is determined and in a yet another step 511, the reference temperature of the rotor is determined. Advantageously, the reference temperatures of the stator and the rotor are determined in a stand still position of the generator. Exemplarily, the rotor and the stator are in thermal equilibrium during the measurement of the reference temperatures, thus both reference temperatures are equal. Exemplarily, the reference temperature of the stator and the reference temperature of the rotor are determined to be 20 degrees Celsius each.

In another step 512, the reference temperature of the stator is subtracted from the actual temperature of the stator. Thus, a temperature difference of the stator is obtained 520. In the example of Figure 5, the temperature difference of the stator is 70 degrees.

Likewise, in another step 513, the reference temperature of the rotor is subtracted from the actual temperature of the rotor. Thus, a temperature difference of the rotor is obtained 521. In the example of Figure 5, the temperature difference of the stator is 20 degrees.

Subsequently, the obtained temperature difference of the stator is multiplied 524 with a thermal expansion coefficient of the stator 522, thus obtaining 530 an actual expansion of the stator. Likewise, the obtained temperature difference of the rotor is multiplied 525 with a thermal expansion coefficient of the rotor 523, thus obtaining 531 an actual expansion of the rotor. In the example of Figure 5, the actual expansion of the stator is 1,75 mm, assuming a thermal expansion coefficient of the stator 522 of -0.025 mm per Kelvin; likewise, the actual expansion of the rotor is 1 mm, assuming a thermal expansion coefficient of the rotor 522 of -0.05 mm per Kelvin.

In the next step 532, actual expansion of the rotor actual expansion of the rotor is subtracted from the actual expansion of the stator, thus obtaining 430 an actual width difference of the gap between the rotor and the stator. In the example of Figure 5, the actual width difference of the gap between the rotor and the stator is 0.75 mm.

In the next step 431, a reference width is determined at a reference temperature by means of a length measurement of the gap, e.g. by a gauge. The steps 431, 510 and 511 are performed shortly one after the other.

Finally, the determined reference width is added 432 to the previously obtained actual width difference of the gap. As a result, an actual width of the gap between the rotor and the stator is thus obtained 432.

Assuming a reference width of the gap of exemplarily 4 mm leads to an actual width of the gap in the concrete example described in Figure 5 of 3.15 mm.

**Claims**

1.  Method for determining an actual width of a gap (31) between a rotor (10) and a stator (20) of a generator of a wind turbine,

    - the stator (20) comprising a peripheral stator surface with a peripheral stator surface radius, the peripheral stator surface confining the gap (30) between the stator (20) and the rotor (10) on a first side,
    - the rotor (10) comprising a peripheral rotor surface with a peripheral rotor surface radius, the peripheral rotor surface confining the gap (30) between the stator (20) and the rotor (10) on a second side,
    - the stator (20) and the rotor (10) being arranged such that the peripheral stator surface and the peripheral rotor surface being substantially opposite to each other, and
    - the actual width of the gap (31) being defined by the difference between the peripheral rotor surface radius and the peripheral stator surface radius;

    wherein the method comprises the following steps:

    - measuring at least one out of a reference temperature of the stator and a reference temperature of the rotor,

- measuring at least one out of an actual temperature of the stator and an actual temperature of the rotor,
- determining a reference width of the gap (32) between the rotor (10) and the stator (20) by means of a length measurement of the gap (30),
- adding an actual width difference of the gap between the rotor (10) and the stator (20) to the reference width of the gap (32), wherein the actual width difference of the gap takes thermal expansion of the rotor (10) and thermal expansion of the stator (20) into consideration.

2. Method according to claim 1,
wherein

- the thermal expansion of the rotor (10) can be **characterised by** a thermal expansion coefficient of the rotor (523),
- the thermal expansion of the stator can be **characterised by** a thermal expansion coefficient of the stator (522),
- the thermal expansion coefficient of the rotor (523) is substantially equal to the thermal expansion coefficient of the stator (522), and
- the reference temperature of the stator and the reference temperature of the rotor are substantially equal; and wherein the method comprises the further steps of
- calculating the temperature difference between the stator (20) and the rotor (10),
- multiplying the temperature difference with the thermal expansion coefficient of the stator (522), thus obtaining the actual width difference of the gap between the rotor (10) and

the stator (20), and

- adding the obtained actual width difference of the gap to the reference width of the gap (32), thus obtaining the actual width of the gap (31) between the rotor (10) and the stator (20).

3. Method according to one of the preceding claims,
wherein the reference width of the gap (32) between the rotor (10) and the stator (20) is determined by means of at least one optical sensor and/or at least one capacitive sensor.

4. Method according to one of the preceding claims,
wherein the reference width of the gap (32) between the rotor (10) and the stator (20) is determined by means of a gauge.

5. Method according to one of the preceding claims,
wherein the actual width difference of the gap between the rotor (10) and the stator (20) is determined while the rotor (10) is rotating relative to the stator (20).

6. Method for controlling an actual width of a gap (31) between a rotor (10) and a stator (20) of a generator of a wind turbine,
wherein the method comprises determining the actual width of the gap (31) between the rotor (10) and the stator (20) according to one of the claims 1 to 5 and furthermore comprises the step of

n) heating the stator (20) and/or heating the rotor (10) such that the actual width of the gap (31) between the rotor (10) and the stator (20) remains in a predetermined range.

7. Method for controlling an actual width of a gap (31) between a rotor (10) and a stator (20) of a generator of a wind turbine,
wherein the method comprises determining the actual width of the gap (31) between the rotor (10) and the stator (20) according to one of the claims 1 to 5 and furthermore comprises the step of

m) cooling the stator (20) and/or cooling the rotor (10) such that the actual width of the gap (31) between the rotor (10) and the stator (20) remains in a predetermined range.

8. Method according to claim 7,
wherein the cooling is performed by guiding a cooling fluid in a way that the cooling fluid is in thermal contact with the stator (20) and/or the rotor (10).

9. Method according to claim 8,
   wherein the cooling fluid comprises air.

10. Generator of a wind turbine comprising a stator (20), a rotor (10), means for determining the temperature of the rotor (10), and means for determining the temperature of the stator (20),
    wherein

    - the stator (20) comprises a peripheral stator surface with a peripheral stator surface radius, the peripheral stator surface confining a gap (30) between the stator (20) and the rotor (10) on a first side,
    - the rotor (10) comprises a peripheral rotor surface with a peripheral rotor surface radius, the peripheral rotor surface confining the gap (30) between the stator (20) and the rotor (10) on a second side,
    - the stator (20) and the rotor (10) are arranged such that the peripheral stator surface and the peripheral rotor surface are substantially opposite to each other, and
    - an actual width of the gap (31) is defined by the difference between the peripheral rotor surface radius and the peripheral stator surface radius; and
    - wherein the generator comprises a control unit for controlling the actual width of the gap (31) between the rotor (10) and the stator (20) by a method according to one of the claims 6 to 9.

# FIG 1

# FIG 2

# FIG 3

# FIG 4

410 — [ ]    [ ] — 411

412

420 — [ ]    [ ] — 421

422

431 — [ ]    [ ] — 430

432

433

# FIG 5

Europäisches
Patentamt

European
Patent Office

Office européen
des brevets

**EUROPEAN SEARCH REPORT**

Application Number

EP 13 18 4992

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DE 199 61 528 C1 (SIEMENS AG [DE]) 13 June 2001 (2001-06-13) * column 2, line 43 - line 51; figure 2 * * column 6, line 16 - line 37 * * column 8, line 32 - column 9, line 39 * ----- | 1-10 | INV. H02K11/00 G01B5/00 G01B21/16 ADD. H02K7/18 |
| A | US 3 743 934 A (RISCH R) 3 July 1973 (1973-07-03) * column 1, line 46 - column 2, line 19; figure 1 * ----- | 1-10 | |
| A | DE 10 2011 077736 A1 (SIEMENS AG [DE]) 20 December 2012 (2012-12-20) * paragraph [0002] - paragraph [0003]; claim 1; figure 1 * ----- | 1-10 | |

TECHNICAL FIELDS
SEARCHED (IPC)

H02K
G01B
G01R

The present search report has been drawn up for all claims

| Place of search | Date of completion of the search | Examiner |
|---|---|---|
| Munich | 18 July 2014 | Sollinger, Martin |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

........................................................................................

& : member of the same patent family, corresponding
  document

EPO FORM 1503 03.82 (P04C01)

**ANNEX TO THE EUROPEAN SEARCH REPORT
ON EUROPEAN PATENT APPLICATION NO.**

EP 13 18 4992

This annex lists the patent family members relating to the patent documents cited in the above-mentioned European search report.
The members are as contained in the European Patent Office EDP file on
The European Patent Office is in no way liable for these particulars which are merely given for the purpose of information.

18-07-2014

| Patent document cited in search report | Publication date | Patent family member(s) | Publication date |
|---|---|---|---|
| DE 19961528 C1 | 13-06-2001 | AT 242928 T | 15-06-2003 |
| | | BR 0016497 A | 27-08-2002 |
| | | CA 2394705 A1 | 28-06-2001 |
| | | CN 1409887 A | 09-04-2003 |
| | | DE 19961528 C1 | 13-06-2001 |
| | | EP 1240703 A1 | 18-09-2002 |
| | | US 2003011397 A1 | 16-01-2003 |
| | | WO 0147092 A1 | 28-06-2001 |
| US 3743934 A | 03-07-1973 | AT 310846 B | 25-10-1973 |
| | | BE 767296 A1 | 18-10-1971 |
| | | CA 941899 A1 | 12-02-1974 |
| | | CH 516885 A | 15-12-1971 |
| | | DE 2041594 A1 | 02-12-1971 |
| | | DE 7031395 U | 13-04-1972 |
| | | FR 2091682 A5 | 14-01-1972 |
| | | GB 1295608 A | 08-11-1972 |
| | | JP S5620481 B1 | 14-05-1981 |
| | | SE 366878 B | 06-05-1974 |
| | | US 3743934 A | 03-07-1973 |
| DE 102011077736 A1 | 20-12-2012 | DE 102011077736 A1 | 20-12-2012 |
| | | WO 2012172036 A1 | 20-12-2012 |

EPO FORM P0459

For more details about this annex : see Official Journal of the European Patent Office, No. 12/82